(19) Europäisches Patentamt / European Patent Office / Office européen des brevets

(11) **EP 4 458 776 A1**

(12) **EUROPEAN PATENT APPLICATION**

(43) Date of publication:
**06.11.2024 Bulletin 2024/45**

(21) Application number: **24162006.1**

(22) Date of filing: **07.03.2024**

(51) International Patent Classification (IPC):
**C01G 53/00** (2006.01) **H01M 4/525** (2010.01)

(52) Cooperative Patent Classification (CPC):
**C01G 53/50; H01M 4/505; H01M 4/525;
H01M 10/0525;** C01P 2002/88; C01P 2004/61;
C01P 2006/12; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.04.2023 JP 2023064101**

(71) Applicant: **Prime Planet Energy & Solutions, Inc.
Chuo-ku
Tokyo
103-0022 (JP)**

(72) Inventor: **SAITO, Masaya
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **SELECTION METHOD AND PRODUCTION METHOD OF NICKEL-COBALT-MANGANESE-BASED ACTIVE MATERIAL FOR POSITIVE ELECTRODE**

(57) The present disclosure relates to a method of selecting a nickel-cobalt-manganese-based active material for a positive electrode, the method comprising: a heat mass spectrometry step that involves determining by heat mass spectrometry a mass decrease rate (mass%/min) of a nickel-cobalt-manganese-based active material at temperatures from 100 to 600°C at a temperature raising rate of 5°C/min; and a determination step that involves determining whether the nickel-cobalt-manganese-based active material satisfies an expression (1).

The present disclosure provides a selection method and a production method of a nickel-cobalt-manganese-based active material for a positive electrode capable of enhancing storage properties of a non-aqueous electrolyte secondary battery, as well as such a nickel-cobalt-manganese-based active material for a positive electrode, as well as a mixture, a positive electrode plate (10), and a non-aqueous electrolyte secondary battery (100) including the same.

FIG.1

START → HEAT MASS SPECTROMETRY STEP (A) → DETERMINATION STEP (B) → END

EP 4 458 776 A1

**Description**

CROSS REFERENCE TO RELATED APPLICATIONS

This nonprovisional application is based on Japanese Patent Application No. 2023-064101 filed on April 11, 2023, with the Japan Patent Office, the entire contents of which are hereby incorporated by reference.

BACKGROUND OF THE INVENTION

Field of the Invention

The present disclosure relates to a selection method and a production method of a nickel-cobalt-manganese-based active material for a positive electrode, and it also relates to a nickel-cobalt-manganese-based active material for a positive electrode, as well as a mixture, a positive electrode plate, and a non-aqueous electrolyte secondary battery including the same.

Description of the Background Art

International Patent Laying-Open No. WO 2020/174794 suggests a non-aqueous electrolyte secondary battery in which the nickel ratio of nickel-containing lithium composite oxide is increased to successfully enhance the capacity and to reduce resistance increase and internal short circuits.

SUMMARY OF THE INVENTION

When a nickel-cobalt-manganese-based active material having a high nickel ratio (70 mol % or more, for example) is used in a non-aqueous electrolyte secondary battery, storage properties of the non-aqueous electrolyte secondary battery can be impaired.

An object of the present disclosure is to provide a selection method and a production method of a nickel-cobalt-manganese-based active material for a positive electrode capable of enhancing storage properties of a non-aqueous electrolyte secondary battery, as well as such a nickel-cobalt-manganese-based active material for a positive electrode, as well as a mixture, a positive electrode plate, and a non-aqueous electrolyte secondary battery including the same.

The present disclosure provides a selection method and a production method of a nickel-cobalt-manganese-based active material for a positive electrode as described below, as well as such a nickel-cobalt-manganese-based active material for a positive electrode, as well as a mixture, a positive electrode plate, and a non-aqueous electrolyte secondary battery including the same.

[1] A method of selecting a nickel-cobalt-manganese-based active material for a positive electrode, the method comprising:

a heat mass spectrometry step that involves determining by heat mass spectrometry a mass decrease rate (mass%/min) of a nickel-cobalt-manganese-based active material at temperatures from 100 to 600°C at a temperature raising rate of 5°C/min; and
a determination step that involves determining whether the nickel-cobalt-manganese-based active material satisfies the following expression:

$$(1)\ Wd \leq 1.10$$

where the mass decrease rate (mass%/min) is represented as Wd.

[2] The method of selecting a nickel-cobalt-manganese-based active material for a positive electrode according to [1], wherein the heat mass spectrometry step includes a sampling step that involves obtaining a nickel-cobalt-manganese-based active material for heat mass spectrometry from a battery in a charged state.
[3] The method of selecting a nickel-cobalt-manganese-based active material for a positive electrode according to [1] or [2], wherein the nickel-cobalt-manganese-based active material has a ratio of nickel of 70 mol % or more.
[4] The method of selecting a nickel-cobalt-manganese-based active material for a positive electrode according to any one of [1] to [3], wherein the nickel-cobalt-manganese-based active material includes single crystal particles.
[5] A method of producing a nickel-cobalt-manganese-based active material for a positive electrode, the method comprising a selection step that involves carrying out the method of selecting a nickel-cobalt-manganese-based active material for a positive electrode according to any one of [1] to [4].

[6] A nickel-cobalt-manganese-based active material for a positive electrode, having a mass decrease rate per minute determined by heat mass spectrometry at 100 to 600°C at a temperature raising rate of 5°C/min of 1.10 mass%/min or less.

[7] The nickel-cobalt-manganese-based active material for a positive electrode according to [6], having a ratio of nickel of 70% or more.

[8] The nickel-cobalt-manganese-based active material for a positive electrode according to [6] or [7], including single crystal particles.

[9] A nickel-cobalt-manganese-based active material mixture for a positive electrode, including the nickel-cobalt-manganese-based active material for a positive electrode according to any one of [6] to [8] and another nickel-cobalt-manganese-based active material that is different from the nickel-cobalt-manganese-based active material for a positive electrode.

[10] The nickel-cobalt-manganese-based active material mixture for a positive electrode according to [9], wherein the nickel-cobalt-manganese-based active material for a positive electrode includes single crystal particles, and the another nickel-cobalt-manganese-based active material that is different from the nickel-cobalt-manganese-based active material for a positive electrode includes polycrystal particles.

[11] A positive electrode plate having a positive electrode active material layer, wherein the positive electrode active material layer includes the nickel-cobalt-manganese-based active material for a positive electrode according to any one of [6] to [8].

[12] A non-aqueous electrolyte secondary battery including the positive electrode plate according to [11].

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic flowchart illustrating a method of selecting a nickel-cobalt-manganese-based active material for a positive electrode according to the present embodiment.
Fig. 2 is a schematic flowchart illustrating a method of producing a nickel-cobalt-manganese-based active material for a positive electrode according to the present embodiment.
Fig. 3 is a schematic view illustrating an example configuration of a positive electrode plate according to the present embodiment.
Fig. 4 is a schematic flowchart illustrating a method of producing a positive electrode plate according to the present embodiment.
Fig. 5 is a schematic view illustrating an example configuration of a battery according to the present embodiment.
Fig. 6 is a schematic view illustrating an example configuration of an electrode assembly according to the present embodiment.

DESCRIPTION OF THE PREFERRED EMBODIMENTS

In the following, a description will be given of an embodiment of the present disclosure with reference to drawings; however, the below-described embodiment does not limit the scope of the present disclosure. In each drawing below, the scale has been changed as appropriate for the purpose of assisting the understanding about the component(s); therefore, the scale of the component(s) in the drawings may not necessarily coincide with the actual scale of the component(s).

Herein, a singular form also includes its plural meaning, unless otherwise specified. For example, "a particle" may mean not only "one particle" but also "a group of particles (powder, particles)".

<Method of Selecting Nickel-Cobalt-Manganese-Based Active Material for Positive Electrode>

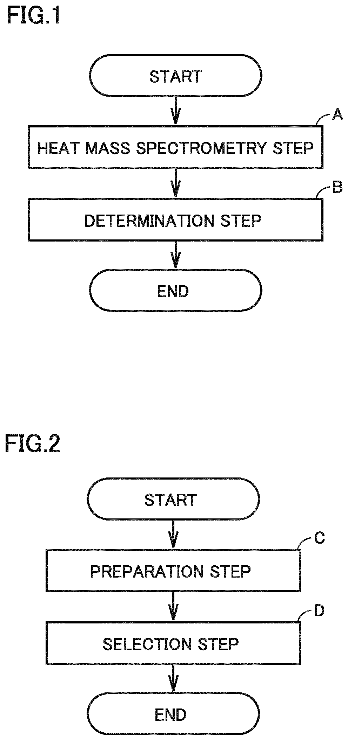

A method of selecting a nickel-cobalt-manganese-based active material for a positive electrode (hereinafter also called an NCM active material for a positive electrode) according to the present embodiment (hereinafter, the method is also called the selection method) comprises, as illustrated in Fig. 1, a heat mass spectrometry step A that involves determining by heat mass spectrometry a mass decrease rate (mass%/min) of a nickel-cobalt-manganese-based active material (hereinafter also called an NCM active material) at temperatures from 100 to 600°C at a temperature raising rate of 5°C/min (hereinafter also called the mass decrease rate), and a determination step B that involves determining whether the NCM active material satisfies an expression (1). The NCM active material for a positive electrode can be for a positive electrode of a non-aqueous electrolyte secondary battery (hereinafter also called a battery). Details of the battery will be described below.

In the heat mass spectrometry step A, the mass decrease rate can be determined by heat mass spectrometry. The heat mass spectrometry can be carried out by the procedure described below. An NCM active material for heat mass spectrometry in an amount of 20 mg is placed on a pan that is dedicated for a heat mass spectrometer, which is then set into a heat mass spectrometer, followed by heating in an Ar atmosphere at a temperature raising rate of 5°C/min up to a temperature of 600°C to measure the decrement of mass at temperatures from 100°C to 600°C and thereby calculate the mass decrease rate per minute. The heat mass spectrometry can be carried out by a method that is described below in the Examples section.

In the determination step B, by heat mass spectrometry, whether the NCM active material satisfies the expression (1) is determined. By using the NCM active material that was determined in the determination step B to satisfy the expression (1), as an NCM active material for a positive electrode, in a positive electrode active material layer, it is possible to reduce the amount of gas produced during storage of the battery in a charged state at high temperatures (the amount is also called a storage gas amount, hereinafter) to enhance storage properties. In consideration of the fact that storage gas is produced usually from a side reaction between an electrolyte solution and an NCM active material contained in a positive electrode, it was unexpected to find that the storage gas is related not to the composition, average particle size, or specific surface area of the NCM active material but to the mass decrease rate.

From the viewpoint of storage properties, the right side of the expression (1) is preferably 1.00 or less, more preferably 0.45 or less, further preferably 0.40 or less. The left side of the expression (1) is usually 0 or more, and, for example, it may be 0.0001 or more, or 0.001 or more, or 0.01 or more, or 0.1 or more.

The heat mass spectrometry step A can include a sampling step that involves obtaining the NCM active material for heat mass spectrometry from a battery in a charged state. The battery has a positive electrode plate that comprises a positive electrode active material layer including the NCM active material. The battery may have been charged to a charged state by constant-current charging at a temperature of 25°C and at a current density of 0.2 mA/cm$^2$ to reach 4.35 V followed by constant-voltage charging to reach a current density of 0.04 mA/cm$^2$ at 4.35 V. From the battery thus charged to a charged state, the positive electrode plate can be taken out, and then, from the positive electrode active material layer of the positive electrode plate, the NCM active material for heat mass spectrometry can be obtained. The test cell may be a stack-type one, or may be a wound-type one, for example. More details of the method for producing the test cell, the method for charging the test cell, and the method for taking out the NCM active material for heat mass spectrometry from the test cell in a charged state are explained in the Examples section below.

The NCM active material includes one or more types of nickel-cobalt-manganese-containing compound (a compound containing nickel, cobalt, and manganese). The nickel-cobalt-manganese-containing compound can be in the form of single crystal particles or polycrystal particles, which are described below. In the NCM active material, the ratio of nickel to metallic elements except lithium may be, for example, 70 mol% or more, preferably 75 mol% or more, more preferably 80 mol% or more, further preferably 85 mol% or more, particularly preferably 90 mol% or more. Preferably, the nickel-cobalt-manganese-containing compound includes a nickel-cobalt-manganese composite hydroxide, more preferably a lithium-nickel-cobalt-manganese composite oxide. The nickel-cobalt-manganese composite hydroxide may be obtained by coprecipitation and/or the like, for example. The nickel-cobalt-manganese composite hydroxide may be a compound represented by the general formula $Ni_xCo_yMn_z(OH)_2$ (where x+y+z=1), for example. In the lithium-nickel-cobalt-manganese composite oxide, the molar ratio of lithium to nickel, cobalt, and manganese, namely Li:(Ni+Co+Mn), can be from (1.0 to 1.2): 1.0, for example.

The NCM active material may include a first layered metal oxide, for example. The first layered metal oxide is represented by the following formula (i).

$$Li_{1-a1}Ni_{x1}Me^1_{1-x1}O_2 \qquad (i)$$

In the formula (i), "a1" satisfies the relationship of "-0.3≤a1≤0.3". "x1" satisfies the relationship of "0. 1≤x≤0.95". "Me$^1$" denotes at least one selected from the group consisting of Co, Mn, Al, Zr, Ti, V, Cr, Fe, Cu, Zn, Mo, Sn, Ge, Nb, and W.

The NCM active material may include at least one selected from the group consisting of $LiNi_{0.7}Co_{0.2}Mn_{0.1}O_2$, $LiNi_{0.7}Co_{0.1}Mn_{0.2}O_2$, $LiNi_{0.75}Co_{0.15}Mn_{0.1}O_2$, $LiNi_{0.75}Co_{0.1}Mn_{0.15}O_2$, and $LiNi_{0.8}Co_{0.1}Mn_{0.1}O_2$, for example. The NCM active material may consist essentially of at least one selected from the group consisting of $LiNi_{0.7}Co_{0.2}Mn_{0.1}O_2$, $LiNi_{0.7}Co_{0.1}Mn_{0.2}O_2LiNi_{0.75}Co_{0.15}Mn_{0.1}O_2$, $LiNi_{0.75}Co_{0.1}Mn_{0.15}O_2$, and $LiNi_{0.8}Co_{0.1}Mn_{0.1}O_2$, for example.

The NCM active material may include single crystal particles, or may include polycrystal particles, or may include both single crystal particles and polycrystal particles, for example. Each of the single crystal particle and the polycrystal particle may be one particle, for example, or may be an aggregate of two to ten primary particles, for example.

A primary particle refers to a particle whose grain boundary is not visually identified in an SEM image of the particle. The single crystal particles and the polycrystal particles may be spherical, columnar, in lumps, and/or the like, for example. Preferably, the NCM active material includes single crystal particles, more preferably it consists of single crystal particles.

The size of the single crystal particles and the polycrystal particles is not particularly limited. For example, the average particle size, D50, of the single crystal particles may be from 1 $\mu$m to 20 $\mu$m, preferably from 1 $\mu$m to 10 $\mu$m, more preferably from 1 $\mu$m to 5 $\mu$m. For example, the average particle size, D50, of the polycrystal particles may be from 1 $\mu$m to 40 $\mu$m, preferably from 1 $\mu$m to 30 $\mu$m, more preferably from 1 $\mu$m to 20 $\mu$m. The average particle size, D50, refers to a particle size in volume-based particle size distribution at which the cumulative particle volume accumulated from the side of small particle sizes reaches 50% of the total particle volume. The average particle size may be measured by laser diffraction and scattering.

The single crystal particles may have a BET specific surface area from 0.4 $m^2/g$ to 5.0 $m^2/g$, for example. The polycrystal particles may have a BET specific surface area from 0.1 $m^2/g$ to 5.0 $m^2/g$, for example. Herein, the BET specific surface area is measured by a BET multi-point method.

<Method of Producing NCM Active Material for Positive Electrode>

A method of producing an NCM active material for a positive electrode according to the present embodiment includes a selection step that involves carrying out the above-described method of selecting an NCM active material for a positive electrode. With the method of producing an NCM active material for a positive electrode including the selection step, it is possible to provide an NCM active material for a positive electrode that allows for reduction of the storage gas amount in the battery to enhance storage properties. The method of producing an NCM active material for a positive electrode can further include a preparation step that involves preparing an NCM active material. For example, the method of producing an NCM active material for a positive electrode includes a preparation step C and a selection step D as illustrated in Fig. 2. To the NCM active material prepared in the preparation step C, the above description applies.

In the preparation step C, an NCM active material can be prepared. When it is a lithium-nickel-cobalt-manganese composite oxide, the NCM active material can be prepared by mixing a lithium source such as, for example, lithium hydroxide, with a nickel-cobalt-manganese composite hydroxide, and then calcining the resultant to obtain a lithium-nickel-cobalt-manganese composite oxide having an aggregated structure, followed by adding a metal oxide to the resultant and carrying out heat treatment.

In the selection step D, in the case where the NCM active material was determined to satisfy the above-mentioned expression (1), the NCM active material can be selected as an NCM active material for a positive electrode. In the case where the NCM active material for a positive electrode thus selected has not been surface-treated, it may be surface-treated in a subsequent surface treatment step.

<NCM Active Material for Positive Electrode>

An NCM active material for a positive electrode according to the present embodiment has a mass decrease rate of 1.10 mass%/min or less. To the mass decrease rate, the above description applies. With the NCM active material for a positive electrode having the mass decrease rate as described above, it is possible to reduce the storage gas amount in the battery to enhance storage properties. The NCM active material for a positive electrode can be obtained by the above-described method of producing an NCM active material for a positive electrode.

From the viewpoint of reduction of the storage gas amount, the mass decrease rate of the NCM active material for a positive electrode may be preferably 1.00 or less, more preferably 0.45 or less, further preferably 0.40 or less, and may be usually 0 or more, such as, for example, 0.0001 or more, or 0.001 or more, or 0.01 or more, or 0.1 or more.

To the NCM active material for a positive electrode, the above description about the NCM active material applies, except for the mass decrease rate. In the NCM active material for a positive electrode, the ratio of nickel to metallic elements except lithium may be, for example, 70 mol% or more, preferably 75 mol% or more, more preferably 80 mol% or more, further preferably 85 mol% or more, particularly preferably 90 mol% or more. Preferably, the NCM active material for a positive electrode includes single crystal particles, more preferably it consists of single crystal particles.

<NCM Active Material Mixture for Positive Electrode>

An NCM active material mixture for a positive electrode according to the present embodiment includes the above-described NCM-based active material for a positive electrode (hereinafter also called a first NCM active material) and another NCM-based active material that is different from the NCM active material for a positive electrode (hereinafter also called a second NCM active material).

The second NCM active material includes one or more types of nickel-cobalt-manganese-containing compound.

In the second NCM active material, the ratio of nickel to metallic elements except lithium may be, for example, 70 mol% or more, preferably 75 mol% or more, more preferably 80 mol% or more, further preferably 85 mol% or more, particularly preferably 90 mol% or more. Preferably, the nickel-cobalt-manganese-containing compound includes a nickel-cobalt-manganese composite hydroxide, more preferably a lithium-nickel-cobalt-manganese composite oxide. The nickel-cobalt-manganese composite hydroxide may be obtained by coprecipitation and/or the like, for example. The nickel-cobalt-manganese composite hydroxide may be a compound represented by the general formula $Ni_xCo_yMn_z(OH)_2$ (where x+y+z=1), for example. In the lithium-nickel-cobalt-manganese composite oxide, the molar ratio of lithium to nickel, cobalt, and manganese, namely Li:(Ni+Co+Mn), can be from (1.0 to 1.2):1.0, for example.

The second NCM active material may include a second layered metal oxide, for example. The second layered metal oxide is represented by the following formula (ii).

$$Li_{1-a1}Ni_{x1}Me^2_{1-x1}O_2 \qquad \text{(ii)}$$

In the formula (ii), "al" satisfies the relationship of "$-0.3 \leq a1 \leq 0.3$". "x1" satisfies the relationship of "$0.1 \leq x1 \leq 0.95$". "$Me^2$" denotes at least one selected from the group consisting of Co, Mn, Al, Zr, Ti, V, Cr, Fe, Cu, Zn, Mo, Sn, Ge, Nb, and W.

The second NCM active material may include at least one selected from the group consisting of $LiNi_{0.7}Co_{0.2}Mn_{0.1}O_2$, $LiNi_{0.7}Co_{0.1}Mn_{0.2}O_2$, $LiNi_{0.75}Co_{0.15}Mn_{0.1}O_2$, $LiNi_{0.75}Co_{0.1}Mn_{0.15}O_2$, and $LiNi_{0.8}Co_{0.1}Mn_{0.1}O_2$, for example. The second NCM active material may consist essentially of at least one selected from the group consisting of $LiNi_{0.7}Co_{0.2}Mn_{0.1}O_2$, $LiNi_{0.7}Co_{0.1}Mn_{0.2}O_2$, $LiNi_{0.75}Co_{0.15}Mn_{0.1}O_2$, $LiNi_{0.75}Co_{0.1}Mn_{0.15}O_2$, and $LiNi_{0.8}Co_{0.1}Mn_{0.1}O_2$, for example.

The second NCM active material may include single crystal particles, or may include polycrystal particles, or may include both single crystal particles and polycrystal particles, for example. Preferably, the second NCM active material includes polycrystal particles, more preferably it consists of polycrystal particles. To the single crystal particles and the polycrystal particles, the above description applies.

Preferably, in the NCM active material mixture for a positive electrode, the first NCM active material includes single crystal particles and the second NCM active material includes polycrystal particles; more preferably, the first NCM active material consists of single crystal particles and the second NCM active material consists of polycrystal particles.

<Positive Electrode Plate>

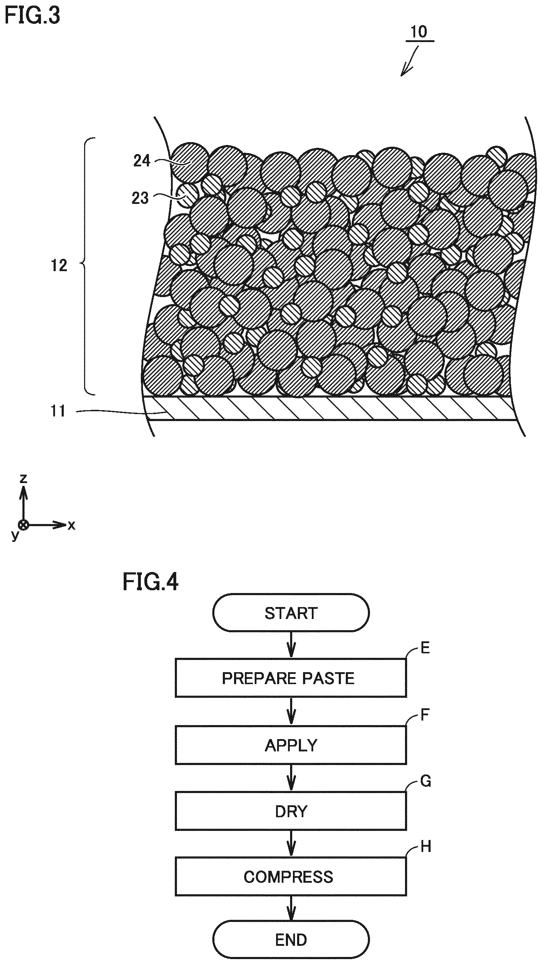

Fig. 3 is a schematic view illustrating an example configuration of a positive electrode plate according to the present embodiment. A positive electrode plate 10 includes a positive electrode base material 11 and a positive electrode active material layer 12, for example. Positive electrode base material 11 is a conductive sheet. Positive electrode base material 11 may be an aluminum alloy foil and/or the like, for example. Positive electrode base material 11 may have a thickness from 10 μm to 30 μm, for example. The thickness of positive electrode base material 11 may be measured with a constant-pressure thickness-measuring instrument (a thickness gauge). Positive electrode active material layer 12 can be placed on the surface of positive electrode base material 11. Positive electrode active material layer 12 may be placed on only one side of positive electrode base material 11, or on both sides thereof.

Positive electrode active material layer 12 may have a thickness from 10 μm to 200 μm, for example. The thickness of positive electrode active material layer 12 is measured in a cross-sectional SEM image of positive electrode active material layer 12. The plane to be observed may be parallel to the thickness direction of positive electrode active material layer 12. The thickness of positive electrode active material layer 12 is measured at five or more positions. The thickness of positive electrode active material layer 12 is defined as the arithmetic mean of these five or more thickness measurements. The density of positive electrode active material layer 12 can be from 3.0 to 3.8 g/cm$^3$, for example.

Positive electrode active material layer 12 includes active material particles 23. Active material particles 23 include the above-described NCM active material for a positive electrode, preferably they are the above-described NCM active material for a positive electrode. Positive electrode active material layer 12 can further include active material particles 24, as illustrated in Fig. 3. When positive electrode active material layer 12 includes active material particles 24, active material particles 23 can be the above-described first NCM active material and active material particles 24 can be the above-described second NCM active material.

Positive electrode active material layer 12 can include a binder and a conductive aid, which are not illustrated in the drawing. Examples of the binder include polyvinylidene difluoride (PVDF), polytetrafluoroethylene (PTFE), polyimide (PI), polyamide (PA), polyamide-imide (PAI), butadiene rubber (BR), styrene-butadiene rubber (SBR), nitrile-butadiene rubber (NBR), styrene-ethylene-butylene-styrene block copolymer (SEBS), carboxymethylcellulose (CMC), a combination of these, and the like. For example, the content of the binder in positive electrode active material layer 12 may be from 0.5 to 10 wt%, preferably from 1.0 to 5 wt%, with respect to the total solid content in positive electrode active material layer 12 being defined as 100 wt%.

The conductive aid can include carbon black such as, for example, acetylene black, other carbon materials (such as graphite), carbon nanotubes, and the like. For example, the content of the conductive aid in positive electrode active material layer 12 may be from 0.05 to 2.0 wt%, preferably from 0.10 to 1.0 wt%, with respect to the total solid content in positive electrode active material layer 12 being defined as 100 wt%.

The method of producing positive electrode plate 10 includes preparation of a positive electrode slurry (E), application (F), drying (G), and compression (H) as illustrated in Fig. 4.

In the preparation of a positive electrode slurry (E), a positive electrode slurry including active material particles is prepared. The positive electrode slurry is prepared by dispersing the active material particles in a dispersion medium. The organic solvent may include, for example, at least one selected from the group consisting of N-methyl-2-pyrrolidone (NMP), tetrahydrofuran (THF), dimethylformamide (DMF), methyl ethyl ketone (MEK), and dimethyl sulfoxide (DMSO). The amount of the organic solvent to be used is not particularly limited. The solid concentration (the mass fraction of solid matter) of the positive electrode slurry is not particularly limited. For example, the slurry may have a solid concentration from 40% to 80%. For the mixing, any stirring apparatus, any mixing apparatus, and/or any dispersing apparatus may be used.

The application (F) may include applying the positive electrode slurry to the surface of a base material to form a coating film. In the present embodiment, with the use of any application apparatus, the positive electrode slurry may be applied to the surface of the base material.

The drying (G) may include heating and drying the coating film with a hot-air dryer and/or the like, for example, to form a dry coating film. The compression (H) may include compressing the dry coating film with any compression apparatus to form positive electrode active material layer 12. When the dried coating film is compressed to form positive electrode active material layer 12, positive electrode plate 10 is completed. Positive electrode plate 10 may be cut into a certain planar size, depending on the specifications of the battery. For example, positive electrode plate 10 may be cut so as to have a belt-like planar shape. For example, positive electrode plate 10 may be cut so as to have a rectangular planar shape.

<Battery>

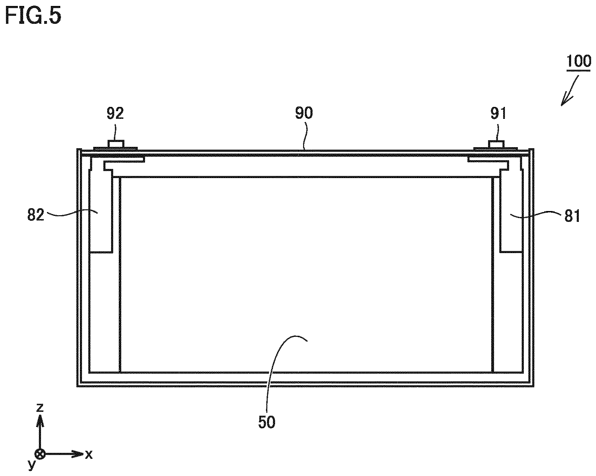

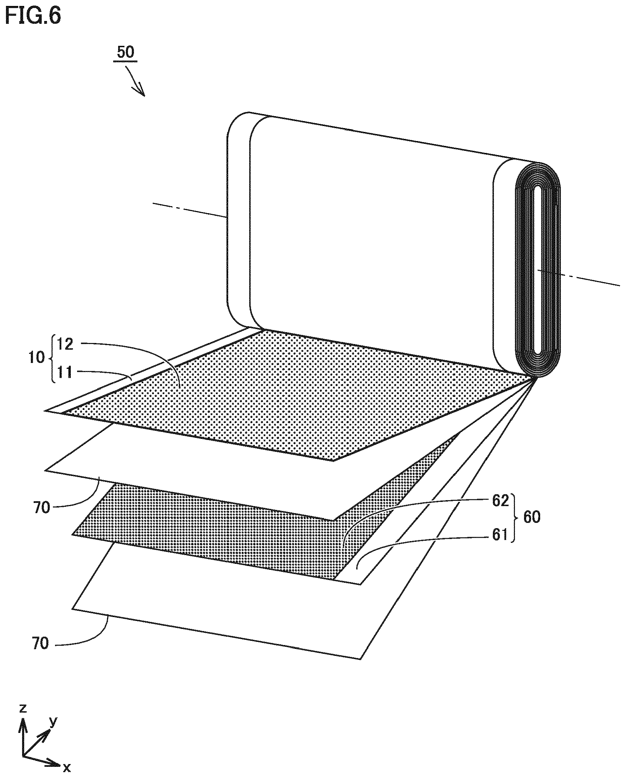

A battery according to the present embodiment can be a lithium-ion battery. Fig. 5 is a schematic view illustrating an example of a battery according to the present embodiment. A battery 100 illustrated in Fig. 5 may be, for example, a lithium-ion battery for use as a main electric power supply or a motive force assisting electric power supply of an electric vehicle. Battery 100 includes an exterior package 90. Exterior package 90 accommodates an electrode assembly 50 and a non-aqueous electrolyte (not illustrated). Electrode assembly 50 is connected to a positive electrode terminal 91 via a positive electrode current-collecting member 81. Electrode assembly 50 is connected to a negative electrode terminal 92 via a negative electrode current-collecting member 82. Fig. 6 is a schematic view illustrating an example of an electrode assembly according to the present embodiment. Electrode assembly 50 is a wound-type one. Electrode assembly 50 includes positive electrode plate 10, a separator 70, and a negative electrode plate 60. That is, battery 100 includes positive electrode plate 10. Positive electrode plate 10 includes positive electrode active material layer 12 and positive electrode base material 11. Negative electrode plate 60 includes a negative electrode active material layer 62 and a negative electrode base material 61.

[Examples]

In the following, the present disclosure will be described in further detail by way of Examples. "%" and "part(s)" in Examples refer to mass% and part(s) by mass, respectively, unless otherwise specified.

<Storage Properties Evaluation Method>

[Method for Producing Positive Electrode Plate]

97.5 parts by mass of a mixture of a first positive electrode active material described below and a second positive electrode active material [a transition metal compound synthesized from LiOH and $Ni_{0.83}Co_{0.09}Mn_{0.08}(OH)_2$; polycrystal particles with particle sizes from 15 to 18 $\mu$m, an average particle size of 16 $\mu$m, and a specific surface area of 0.20 m$^2$/g] mixed at a mass ratio of 5:5, 1.5 parts by mass of carbon black as a conductive aid, and 1.0 part by mass of polyvinylidene difluoride (PVdF) as a binder were mixed together, and then, a proper amount of N-methyl-2-pyrrolidone (NMP) was further added to prepare a positive electrode slurry. The resulting positive electrode slurry was applied to a current collector made of aluminum foil to form a positive electrode active material layer. Subsequently, the resultant was dried, compressed with a compression roller into a density of 3.55 g/cm$^3$, cut into a certain size, and attached with an aluminum tab to form a positive electrode plate.

[Method for Producing Negative Electrode Plate]

A negative electrode active material, carboxymethylcellulose (CMC) as a thickener, and styrene-butadiene rubber (SBR) as a binder, in a mass ratio of 98:1:1, were dispersed in water to prepare a negative electrode slurry. The resulting negative electrode slurry was applied to a current collector made of copper foil to form a negative electrode active material layer. Subsequently, the resultant was dried, rolled with a roller into a certain thickness, cut into a certain size, and attached with a nickel tab to form a negative electrode.

[Method for Preparing Non-Aqueous Electrolyte]

Ethylene carbonate (EC), dimethyl carbonate (DMC), and ethyl methyl carbonate (EMC) were mixed in a volume ratio of 30:30:40. To this mixed solvent, lithium hexafluorophosphate ($LiPF_6$) was added in an amount to achieve a concentration of 1.15 mol/L. Further, vinylene carbonate (VC) was added thereto in an amount to achieve a content thereof of 1.0 mass% relative to the total mass of the mixed solvent, to prepare a non-aqueous electrolyte.

[Method for Producing Test Cell]

The positive electrode plate described above and the negative electrode plate were stacked on top of one another with a separator made of polyolefin interposed therebetween, to produce a stack-type electrode assembly. This electrode assembly was placed inside an exterior package made of an aluminum laminated sheet, and then the above-mentioned non-aqueous electrolyte was injected into it, followed by sealing the opening of the exterior package to obtain a test cell.

[Evaluation of Storage Gas Amount]

The amount of gas in the test cell in a discharged state was defined as a pre-storage gas amount. Subsequently, constant-current charging was carried out under conditions at a temperature of 25°C and at a current density of 0.2 $mA/cm^2$ to reach 4.25 V, and then constant-voltage charging was carried out to reach a current density of 0.04 $mA/cm^2$ at 4.25 V, followed by storage in a thermostatic chamber at 60°C for 60 days. It was followed by constant-current discharging at a current density of 0.2 $mA/cm^2$ to reach 3.0 V, and then the amount of gas was measured, which was defined as a post-storage gas amount. The pre-storage gas was subtracted from the post-storage gas to obtain a storage gas amount. When the storage gas amount is 0.60 cc or less, the storage properties are rated as good.

<Heat Mass Spectrometry>

[Method for Producing Positive Electrode Plate]

97.5 parts by mass of the first positive electrode active material, 1.5 parts by mass of carbon black as a conductive material, and 1.0 part by mass polyvinylidene difluoride (PVdF) as a binder were mixed together, and then, a proper amount of N-methyl-2-pyrrolidone (NMP) was further added to prepare a positive electrode slurry. The resulting positive electrode slurry was applied to a current collector made of aluminum foil to form a positive electrode composite material layer. Subsequently, the resultant was dried, rolled with a roller into a certain thickness, cut into a certain size, and attached with an aluminum tab to form a positive electrode plate.

[Method for Preparing Non-Aqueous Electrolyte]

Ethylene carbonate (EC), dimethyl carbonate (DMC), and ethyl methyl carbonate (EMC) were mixed in a volume ratio of 30:30:40. To this mixed solvent, lithium hexafluorophosphate (LiPF6) was added in an amount to achieve a concentration of 1.15 mol/L. Further, vinylene carbonate (VC) was added thereto in an amount to achieve a content thereof of 1.0 mass% relative to the total mass of the mixed solvent, to prepare a non-aqueous electrolyte.

[Method for Producing Test Cell]

The positive electrode plate and a metal lithium sheet were wound together with a separator made of polyolefin interposed therebetween, to produce a wound-type electrode assembly. This wound-type electrode assembly was placed inside an exterior package made of an aluminum laminated sheet, and then the above-mentioned non-aqueous electrolyte was injected into it, followed by sealing the opening of the exterior package to obtain a test cell.

[Method for Sampling Heat Mass Spectrometry Sample]

The test cell was subjected to constant-current charging under conditions at a temperature of 25°C and at a current density of 0.2 mA/cm$^2$ to reach 4.35 V, and then it was subjected to constant-voltage charging to reach a current density of 0.04 mA/cm$^2$ at 4.35 V. Inside a glove box, the resulting cell in a charged state was disassembled and the positive electrode plate was taken out, which was rinsed with DMC and vacuum dried. From the core of the positive electrode plate, the positive electrode composite material layer was scraped off, which was to be used as a heat mass spectrometry sample.

[Method for Calculating Mass Decrease Rate]

The sample in an amount of 20 mg was placed on a TG pan, which was then set into a heat analysis measurement apparatus (DTG-60AH manufactured by SHIMADZU). Measurement was carried out in an Ar atmosphere at a temperature raising rate of 5°C/min up to a temperature of 600°C. The decrement of mass at temperatures from 100°C to 600°C and the mass decrease rate per minute were calculated.

<Example 1>

Single crystal particles made of a transition metal compound synthesized from LiOH and $Ni_{0.83}Co_{0.09}Mn_{0.08}(OH)_2$ were subjected to heat mass spectrometry as described above, and as a result, the mass decrease rate at temperatures from 100 to 600°C at a temperature raising rate of 5°C/min was 0.99%/min. With these single crystal particles defined as the first positive electrode active material, the storage gas amount was measured in accordance with the storage properties evaluation method described above. Results are shown in Table 1, together with the average particle size (D50) and the specific surface area of the single crystal particles.

<Examples 2, 3 and Comparative Examples 1 to 4>

Single crystal particles having the average particle size (D50) and the specific surface area as specified in Table 1 [single crystal particles made of a transition metal compound synthesized from LiOH and $Ni_{0.83}Co_{0.09}Mn_{0.08}(OH)_2$] were prepared, and the mass decrease rate was measured. The single crystal particles were subjected to measurement of the storage gas amount in the same manner as in Example 1. Results are shown in Table 1.

[Table 1]

|  | Average particle size (μm) | Specific surface area (m$^2$/g) | Mass decrease rate (%/min) | Storage gas amount (cc) |
|---|---|---|---|---|
| Comp. Ex. 1 | 4.0 | 0.56 | 1.51 | 1.15 |
| Comp. Ex. 2 | 4.1 | 0.50 | 1.42 | 0.91 |
| Comp. Ex. 3 | 3.9 | 0.54 | 1.15 | 0.72 |
| Comp. Ex. 4 | 4.2 | 0.51 | 1.12 | 0.70 |
| Ex. 1 | 3.8 | 0.52 | 0.99 | 0.50 |
| Ex. 2 | 3.8 | 0.56 | 0.43 | 0.45 |
| Ex. 3 | 4.0 | 0.50 | 0.38 | 0.44 |

As shown in Table 1, in Examples 1 to 3 where the mass decrease rate was 1.10%/min or less, the storage gas amount was 0.60 cc or less and thereby the storage properties were good. In contrast, in Comparative Examples 1 to 4 where the mass decrease rate was more than 1.10%/min, the storage gas amount was more than 0.60 cc and thereby the storage properties were not sufficient. In addition, Table 1 also indicates that the storage gas amount is not much correlated with the average particle size or the specific surface area. Hence, it is indicated that the method of selecting a nickel-cobalt-manganese-based active material for a positive electrode according to the present disclosure allows for selecting a nickel-cobalt-manganese-based active material for a positive electrode that has good storage properties.

Although the embodiments of the present invention have been described, the embodiments disclosed herein are illustrative and non-restrictive in any respect. The scope of the present invention is defined by the terms of the claims, and is intended to encompass any modifications within the meaning and the scope equivalent to the terms of the claims.

**Claims**

1. A method of selecting a nickel-cobalt-manganese-based active material for a positive electrode, the method comprising:

   a heat mass spectrometry step that involves determining by heat mass spectrometry a mass decrease rate (mass%/min) of a nickel-cobalt-manganese-based active material at temperatures from 100 to 600°C at a temperature raising rate of 5°C/min; and
   a determination step that involves determining whether the nickel-cobalt-manganese-based active material satisfies the following expression:

$$(1)\ Wd \leq 1.10$$

   where the mass decrease rate (mass%/min) is represented as Wd.

2. The method of selecting a nickel-cobalt-manganese-based active material for a positive electrode according to claim 1, wherein the heat mass spectrometry step includes a sampling step that involves obtaining a nickel-cobalt-manganese-based active material for heat mass spectrometry from a battery in a charged state.

3. The method of selecting a nickel-cobalt-manganese-based active material for a positive electrode according to claim 1 or 2, wherein the nickel-cobalt-manganese-based active material has a ratio of nickel of 70 mol % or more.

4. The method of selecting a nickel-cobalt-manganese-based active material for a positive electrode according to any one of claims 1 to 3, wherein the nickel-cobalt-manganese-based active material includes single crystal particles.

5. A method of producing a nickel-cobalt-manganese-based active material for a positive electrode, the method comprising a selection step that involves carrying out the method of selecting a nickel-cobalt-manganese-based active material for a positive electrode according to any one of claims 1 to 4.

6. A nickel-cobalt-manganese-based active material for a positive electrode, having a mass decrease rate per minute determined by heat mass spectrometry at 100 to 600°C at a temperature raising rate of 5°C/min of 1.10 mass%/min or less.

7. The nickel-cobalt-manganese-based active material for a positive electrode according to claim 6, having a ratio of nickel of 70% or more.

8. The nickel-cobalt-manganese-based active material for a positive electrode according to claim 6 or 7, including single crystal particles.

9. A nickel-cobalt-manganese-based active material mixture for a positive electrode, including the nickel-cobalt-manganese-based active material for a positive electrode according to any one of claims 6 to 8 and another nickel-cobalt-manganese-based active material that is different from the nickel-cobalt-manganese-based active material for a positive electrode.

10. The nickel-cobalt-manganese-based active material mixture for a positive electrode according to claim 9, wherein the nickel-cobalt-manganese-based active material for a positive electrode includes single crystal particles, and the another nickel-cobalt-manganese-based active material that is different from the nickel-cobalt-manganese-based active material for a positive electrode includes polycrystal particles.

11. A positive electrode plate (10) having a positive electrode active material layer (12), wherein the positive electrode active material layer includes the nickel-cobalt-manganese-based active material for a positive electrode according to any one of claims 6 to 8.

12. A non-aqueous electrolyte secondary battery (100) including the positive electrode plate (10) according to claim 11.

FIG.1

```
        START
          │
          ▼
HEAT MASS SPECTROMETRY STEP ──A
          │
          ▼
  DETERMINATION STEP ──B
          │
          ▼
        END
```

FIG.2

```
        START
          │
          ▼
  PREPARATION STEP ──C
          │
          ▼
   SELECTION STEP ──D
          │
          ▼
        END
```

## FIG.3

## FIG.4

START

PREPARE PASTE — E

APPLY — F

DRY — G

COMPRESS — H

END

## FIG.5

FIG.6

Europäisches
Patentamt

European
Patent Office

Office européen
des brevets

## EUROPEAN SEARCH REPORT

**Application Number**

EP 24 16 2006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 403 522 A1 (PRIME PLANET ENERGY & SOLUTIONS INC [JP]) 24 July 2024 (2024-07-24) * examples * | 1,2,4-6, 8-12 | INV. C01G53/00 H01M4/525 |
| X | US 2020/373572 A1 (GUNJI AKIRA [JP] ET AL) 26 November 2020 (2020-11-26) * examples 1-2 * | 1-12 | |
| X | US 2022/204360 A1 (NAGAO DAISUKE [JP]) 30 June 2022 (2022-06-30) * examples * | 1-12 | |
| A | WO 2019/221497 A1 (LG CHEMICAL LTD [KR]) 21 November 2019 (2019-11-21) * examples; tables * | 1-12 | |

|  |  |
|---|---|
|  | TECHNICAL FIELDS SEARCHED (IPC) |
|  | C01G H01M |

The present search report has been drawn up for all claims

| Place of search | Date of completion of the search | Examiner |
|---|---|---|
| Munich | 4 September 2024 | Marucci, Alessandra |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.......................................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 16 2006

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | | | Publication date | Patent family member(s) | | | Publication date |
|---|---|---|---|---|---|---|---|
| EP 4403522 | A1 | | 24-07-2024 | CN | 118380552 | A | 23-07-2024 |
| | | | | EP | 4403522 | A1 | 24-07-2024 |
| | | | | JP | 2024102944 | A | 01-08-2024 |
| | | | | KR | 20240116379 | A | 29-07-2024 |
| | | | | US | 2024250255 | A1 | 25-07-2024 |
| US 2020373572 | A1 | | 26-11-2020 | CN | 107112531 | A | 29-08-2017 |
| | | | | EP | 3246973 | A1 | 22-11-2017 |
| | | | | JP | 6197981 | B1 | 20-09-2017 |
| | | | | JP | 6394754 | B2 | 26-09-2018 |
| | | | | JP | 2017216243 | A | 07-12-2017 |
| | | | | JP | WO2017082268 | A1 | 09-11-2017 |
| | | | | KR | 20170086650 | A | 26-07-2017 |
| | | | | US | 2017358799 | A1 | 14-12-2017 |
| | | | | US | 2019181444 | A1 | 13-06-2019 |
| | | | | US | 2020373572 | A1 | 26-11-2020 |
| | | | | WO | 2017082268 | A1 | 18-05-2017 |
| US 2022204360 | A1 | | 30-06-2022 | CN | 113677627 | A | 19-11-2021 |
| | | | | EP | 3954656 | A1 | 16-02-2022 |
| | | | | JP | 6630865 | B1 | 15-01-2020 |
| | | | | JP | 2020172420 | A | 22-10-2020 |
| | | | | KR | 20210150398 | A | 10-12-2021 |
| | | | | US | 2022204360 | A1 | 30-06-2022 |
| | | | | WO | 2020208873 | A1 | 15-10-2020 |
| WO 2019221497 | A1 | | 21-11-2019 | CN | 111819718 | A | 23-10-2020 |
| | | | | CN | 118099413 | A | 28-05-2024 |
| | | | | EP | 3751646 | A1 | 16-12-2020 |
| | | | | EP | 4339164 | A2 | 20-03-2024 |
| | | | | JP | 7139008 | B2 | 20-09-2022 |
| | | | | JP | 2021516424 | A | 01-07-2021 |
| | | | | KR | 20190131842 | A | 27-11-2019 |
| | | | | KR | 20220132491 | A | 30-09-2022 |
| | | | | PL | 3751646 | T3 | 15-07-2024 |
| | | | | US | 2021135187 | A1 | 06-05-2021 |
| | | | | US | 2024258499 | A1 | 01-08-2024 |
| | | | | WO | 2019221497 | A1 | 21-11-2019 |

EPO FORM P0459

For more details about this annex : see Official Journal of the European Patent Office, No. 12/82

**EP 4 458 776 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023064101 A

- WO 2020174794 A